# EUROPÄISCHE PATENTSCHRIFT

(11) **EP 0 636 813 B1**
(45) Veröffentlichungstag und Bekanntmachung des Hinweises auf die Patenterteilung: **23.04.1997**
(21) Anmeldenummer: 93112220.4
(22) Anmeldetag: 30.07.1993
(51) Int. Cl.: F16H 1/22, F16H 57/02

(54) **Parallelwellenzahnradgetriebe**
Gear transmission with parallel shafts
Transmission à engrenages avec des arbres parallèles

(43) Veröffentlichungstag der Anmeldung: 01.02.1995
(73) Patentinhaber: MAAG GETRIEBE AG, CH-8005 Zürich (CH)
(72) Erfinder: Deeg, Thomas, CH-8472 Seuzach (CH)
(74) Vertreter: Troesch Scheidegger Werner AG

(56) Entgegenhaltungen:
- DE-A- 2 363 968
- DE-A- 3 013 297
- DE-B- 1 182 495
- DE-B- 1 203 074
- US-A- 3 610 065

## Beschreibung

Die vorliegende Erfindung betrifft ein Parallelwellenzahnradgetriebe mit Lastenverzweigung, mit einer Antriebswelle, deren Antriebsrad mit Zwischenrädern von zwei Zwischenwellen in Eingriff steht, wobei letztere über Zahnräder direkt oder über weitere Zwischenwellen eine Abtriebswelle antreiben, wobei das Antriebsrad derart zwischen den zwischen rädern angeordnet und geführt ist, dass sich das Antriebsrad mit seiner Welle längs einer bezüglich der Ebene der Achsen von Antriebsrad und Abtriebsrad um einen Winkel α geneigten achsparallelen Ebene selbsttätig so weit verlagern kann, bis das Kräftegleichgewicht und damit der Lastausgleich hergestellt ist.

Getriebe mit Last- bzw. Leistungsverzweigung werden vorzugsweise dann gebaut, wenn hohe Leistungsdichte, niedriges Gewicht und kleine Dimensionen gefordert sind. Klassisch sind die Lösungen mit Planetengetrieben, wo die gesamte zu Übertragende Leistung auf mindestens drei Zahneingriffe verteilt wird. Für viele Anwendungen ist aber das Planetengetriebe nicht mehr geeignet, wie etwa für extrem schnellaufende Getriebe mit hoher Leistung oder für Schiffsgetriebe, wo grosse Laufruhe gefordert wird.

Für derartige Fälle wird z.B. ein Parallelwellengetriebe mit zweifacher Leistungsverzweigung gebaut. Ein Antriebsrad treibt dabei über zwei Zwischenräder auf ein gemeinsames Abtriebsrad, wobei die Antriebsleistung auf die zwei Zahneingriffe mit den Zwischenrädern verteilt wird. Solche Getriebe können auch mehrstufig nach dem gleichen Prinzip gebaut werden. Das grundliegende Problem bei dieser Bauart liegt nun darin, die gesamte Leistung gleichmässig, d.h. zu je 50% auf die beiden Lastpfade zu verteilen. Als Folge von Herstellungstoleranzen in den Verzahnungen, in den Wellen und Lagern sowie Wellenverlagerungen und thermischen Deformationen im Betrieb wäre es nur durch Zufall gegeben, dass diese Lastverteilung ohne geeignete Zusatzmassnahmen stimmt. Da die Steifigkeit des einzelnen Zahneingriffes viel zu gross ist, um die zuvor beschriebenen Einflüsse auszugleichen, müssen bei einem derartigen Getriebe Massnahmen konstruktiver Art getroffen werden, um eine gleichmässige Lastverteilung zu erzielen.

Die Standardlösung bei zweistufigen Getrieben, wie sie vorwiegend in Schiffen mit Turbinenantrieb eingesetzt wird, besteht in der Verbindung der Zwischenräder der ersten Stufe mit den Ritzeln der zweiten Stufe mittels drehelastischen Torsionswellen. Diese Konstruktion bedingt aber vier Radiallager pro Zwischenwelle, die Ausführung von Rädern und Ritzeln als Hohlkörper sowie eine Torsionswelle und zumindest bei Doppeltschrägverzahnung, ein zusätzliches, axial nachgiebiges Element. Eine solche Lösung ist somit recht aufwendig und teuer.

Eine weitere Lösungsmöglichkeit wird beispielsweise in DE-A-2363968 aufgezeigt. Bei dieser Konstruktion, bei welcher grundsätzlich der eingangs beschriebene Aufbau vorgesehen ist, versieht man das Antriebsrad mit einer Einstellmöglichkeit, indem die Lager des Antriebsrades ihrerseits beweglich gelagert sind. Die geforderte Beweglichkeit wird mittels Schwenkarm, Kipp- oder Gleitschuhen oder durch geeignete Anordnung eines Radialkippsegmentlagers erzielt. Es bedingt aber in jedem Falle einen zusätzlichen konstruktiven Aufwand; zudem treten im Betrieb Rückstellkräfte auf, welche im beweglichen Mechanismus Reibungskräfte erzeugen. Die vorgängig beschriebenen konstruktiv aufwendigen Lösungen können für ein- und mehrstufige Getriebe gebaut werden.

Aufgabe der vorliegenden Erfindung war es nun, ein Parallelwellenzahnradgetriebe mit Lastausgleich zu schaffen, bei welchem ein optimaler Lastausgleich ohne zusätzliche aufwendige Mechanismen realisiert werden kann; dies sowohl bei einstufigen als auch bei mehrstufigen Getrieben.

Diese Aufgabe wird bei einem Parallelwellengetriebe der eingangs definierten Art erfindungsgemäss dadurch gelöst, dass die Führungslager des Antriebsrades in Richtung der genannten geneigten Ebene ein grösseres Lagerspiel aufweisen als in der senkrecht dazu verlaufenden Ebene.

Vorzugsweise Ausführungsformen des Erfindungsgegenstandes sind in den abhängigen Ansprüchen definiert.

Insbesondere kann die Führung des Antriebsrades ohne spezielle Führungslager zwischen den Zwischenrädern und dem Abtriebsrad erfolgen oder aber durch spezifisch ausgebildete Führungslager ("Zitronenlager").

Das erfindungsgemässe Getriebe eignet sich insbesondere als Reduktionsgetriebe für einen Schiffschraubenantrieb.

Die Erfindung wird nachstehend anhand von in der Zeichnung dargestellten Ausführungsbeispielen noch etwas näher erläutert. Es zeigt:
- Fig. 1: rein schematisch ein Parallelwellengetriebe mit Antriebsrad, zwei lastverteilenden Zwischenrädern und Abtriebsrad;
- Fig. 2a und 2b: Führungslager für die Welle des Antriebsrades;
- Fig. 3: eine schematische Stirnansicht einer Variante des Getriebes nach Fig. 1, und
- Fig. 4: eine Draufsicht, in etwas verkleinertem Massstab auf das Getriebe nach Fig. 3.

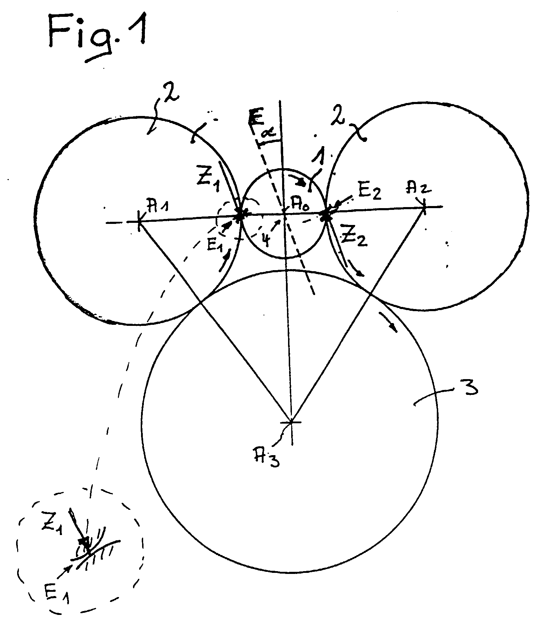

Fig. 1 zeigt ein einstufiges Getriebe mit einem Antriebsrad 1, welches genau in der Ebene der Achsen A₁, A₂ der Zwischenräder 2 angeordnet ist. Diese Zwischenräder 2 kämmen wiederum mit dem Abtriebsrad 3. Bei idealer Lastverteilung auf die je zwei Zahneingriffe E₁ und E₂ sind die Zahnkräfte Z₁ und Z₂ am Antriebsrad 1 genau entgegengesetzt gleich gross, d.h. das Antriebsrad 1 ist im Prinzip kräftefrei.

In der Praxis sind die Zahnspiele in den einzelnen Verzahnungen unterschiedlich, ebenso die Lagerspiele und die Wellendurchmesser. Hinzu kommen unterschiedliche Verlagerungen der Zwischenräder 2 in deren Wellenlagern sowie thermische Einflüsse. Das Kräftegleichgewicht am Antriebsrad 1 stellt sich also nicht automatisch ein, wenn eine herkömmliche Lagerung dieses Antriebsrades 1 gewählt wird. Obwohl das Antriebsrad 1 nach dem Zustand des Kräftegleichgewichtes strebt, könnte es die notwendige Verlagerung seines Achsmittelpunktes Aₒ mit herkömmlicher Lagerung nicht oder nur ungenügend ausführen.

Die Erfindung geht nun davon aus, dass bei einer Räderanordnung gemäss Fig. 1 das Antriebsrad 1 bei guter Lastaufteilung praktisch kräftefrei ist. Dies bedeutet nichts anderes, als dass die Lager des Antriebsrades 1 lediglich eine Führung des Rades, z.B. Führungslager bilden, welche eine spezielle, von der üblichen Lagertheorie abweichende Lagergeometrie aufweisen können. Damit ist die Möglichkeit gegeben, die Lager des Antriebsrades 1 so auszubilden, dass sich der Wellenmittelpunkt Aₒ innerhalb des festen Lagers so verschieben kann, bis das erwünschte Kräftegleichgewicht hergestellt ist. Die Verlagerung des Wellenmittelpunktes Aₒ des Antriebsrades 1 ist am effektivsten in einer Achsparallen Ebene E, welche um den Winkel α gegenüber der Ebene der Achsen von Antriebsrad 1 und Abtriebsrad 3 geneigt ist. Der Winkel α ist vorzugsweise gleich dem Zahneingriffswinkel.

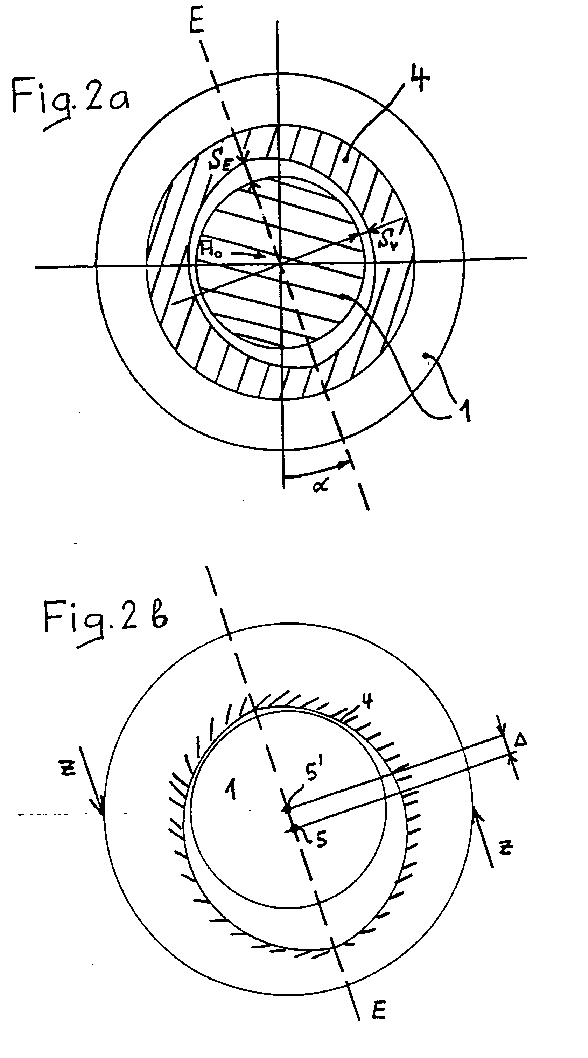

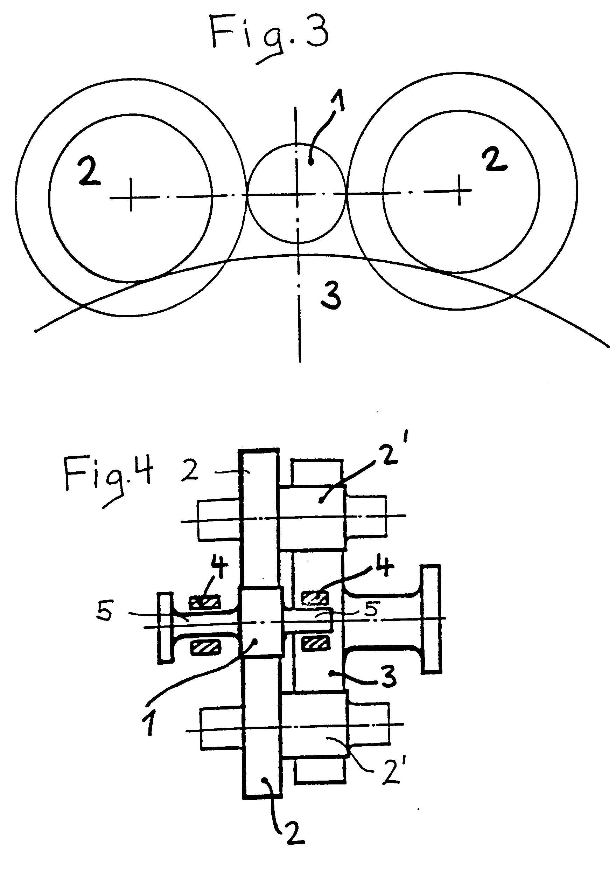

In Fig. 2a ist eine für ein erfindungsgemässes Getriebe geeignete Ausführungsform der Führungslager 4 des Antriebsrades 1 gezeigt. Die Lagergeometrie entspricht von der Formgebung her einem "Zitronenlager". Das Lagerspiel S_{E} ist so gross zu wählen, dass alle im Betrieb auftretenden Effekte, welche zu ungleicher Lastverteilung am Antriebsrad 1 führen würden, mittels Ausgleichsbewegung des Wellenmittelpunktes Aₒ des Antriebsrades 1 in der Ebene E kompensiert werden.

Wie Fig. 2b zeigt, verlagert sich der Wellenmittelpunkt 5 von seiner geometrischen Lage in seine Betriebslage 5', in der Kräftegleichgewicht und damit ideale Lastaufteilung herrscht. Die Verlagerung Δ kompensiert alle zuvor beschriebenen Einflüsse, wie ungleiche Zahnspiele usw..Das Lagerspiel Sᵥ senkrecht zur Ebene E kann gemäss üblichen Lagerspieltheorien klein gewählt werden. Es dient zur eigentlichen "seitlichen" Führung des Antriebsrades 1.

In Fig. 3 und 4 ist die erfindungsgemässe Konstruktion eines zweistufigen, leistungsverzweigten Schiffsgetriebes dargestellt. Für Teile, welche jenen nach Fig. 1 entsprechen, wurden entsprechende Ueberweisungsziffern verwendet. Die resultierenden Vorteile von kürzester Bauform, niedrigem Gewicht und Einsparung an Zwischenwellenlagern sowie Lastverteilungsmechanismen kommen hier besonders zum Tragen.

Die zweite Stufe wird durch mit den Zwischenrädern 2 fest verbundene oder mit letzterer einstückig ausgebildete Räder 2', welche schliesslich mit dem Abtriebsrad 3 kämmen, gebildet. Die Welle 5 des Antriebsrades 1 ist in Lagern 4, z.B. gemäss Fig. 2a und 2b, geführt.

## Patentansprüche

1. Parallelwellenzahnradgetriebe mit Lastverzweigung, mit einer Antriebswelle, deren Antriebsrad (1) mit Zwischenrädern (2) von zwei Zwischenwellen in Eingriff steht, wobei letztere über Zahnräder direkt oder über weitere Zwischenwellen eine Abtriebswelle antreiben, wobei das Antriebsrad (1) derart zwischen den Zwischenrädern (2) angeordnet und geführt ist, dass sich das Antriebsrad (1) mit seiner Welle längs einer bezüglich der Ebene der Achsen von Antriebsrad (1) und Abtriebsrad (3) um einen Winkel α geneigten achsparallelen Ebene (E) selbsttätig wo weit verlagern kann, bis das Kräftegleichgewicht und damit der Lastausgleich hergestellt ist, dadurch gekennzeichnet, dass die Führungslager (4) des Antriebsrades (1) in Richtung der genannten geneigten Ebene (E) ein grösseres Lagerspiel (S_{E}) aufweisen als in der senkrecht dazu verlaufenden Ebene.

2. Getriebe nach Anspruch 1, dadurch gekennzeichnet, dass das Antriebsrad (1) mit seiner Achse in der gleichen Ebene wie die Achsen der Zwischenräder (2) angeordnet ist.

3. Getriebe nach Anspruch 1, dadurch gekennzeichnet, dass Antriebsrad (1), Zwischenräder (2) und Abtriebsrad (3) einen geschlossenen Räderzug bilden, wobei das Antriebsrad (1) zwischen den Zwischenrädern (2) und dem Abtriebsrad (3) in radialer Richtung eingeschlossen ist.

4. Getriebe nach einem der Ansprüche 1-3, dadurch gekennzeichnet, dass der Neigungswinkel α der genannten Ebene (E) gleich dem Zahneingriffswinkel ist.

5. Getriebe nach einem der Ansprüche 1-4, dadurch gekennzeichnet, dass es als zwei- oder mehrstufiges Getriebe ausgeführt ist.

6. Verwendung des Getriebes nach einem der Ansprüche 1-5 als Reduktionsgetriebe für einen Schiffsantrieb.

## Claims

1. Parallel-shaft gear unit with load division, comprising a drive shaft whose driving gear (1) meshes with intermediate gears (2) of two intermediate shafts, the latter driving a driven shaft via gears directly or via other intermediate shafts, and the driving gear (1) being arranged and guided between the intermediate gears (2) such that the driving gear (1) together with its shaft can be moved automatically along an axially parallel plane (E), which is inclined at an angle α relative to the plane of the axes of the driving gear (1) and driven gear (3), so far that equilibrium of forces and thereby load balancing are achieved, characterized in that the guide bearings (4) of the driving gear (1) have greater bearing play (S_{E}) in the direction of said inclined plane (E) than in the plane extending at right angles thereto.

2. Gear unit according to Claim 1, characterized in that the driving gear (1) is arranged with its axis in the same plane as the axes of the intermediate gears (2).

3. Gear unit according to Claim 1, characterized in that the driving gear (1), intermediate gears (2) and driven gear (3) form a closed gear train, the driving gear (1) being enclosed in the radial direction between the intermediate gears (2) and the driven gear (3).

4. Gear unit according to one of Claims 1 to 3, characterized in that the angle of inclination α of said plane (E) is equal to the tooth engagement angle.

5. Gear unit according to one of Claims 1 to 4, characterized in that it is in the form of a two-stage or multistage gear unit.

6. Use of the gear unit according to one of Claims 1 to 5 as a reduction gear unit for a ship's drive.

## Revendications

1. Transmission à engrenages avec des arbres parallèles avec une répartition des charges, avec un arbre menant dont la roue menante (1) engrène avec des roues intermédiaires (2) de deux arbres intermédiaires, où ces derniers entraînent par des roues dentées directement ou par d'autres arbres intermédiaires un arbre mené, la roue menante (1) étant disposée et guidée entre les roues intermédiaires (2) de façon que la roue menante (1) peut se déplacer automatiquement avec son arbre le long d'un plan (E) parallèle à l'axe, incliné relativement au plan des axes de la roue menante (1) et de la roue menée (3) suivant un angle α jusqu'à ce que l'équilibre des forces et par conséquent la répartition des charges soit atteint, caractérisé en ce que les paliers de guidage (4) de la roue menante (1) ont dans la direction du plan incliné précité (E) un plus grand jeu de palier (S_{E}) que dans le plan s'étendant perpendiculairement à celui-ci.

2. Transmission selon la revendication 1, caractérisée en ce que la roue menante (1) est disposée avec son axe dans le même plan que les axes des roues intermédiaires (2).

3. Transmission selon la revendication 1, caractérisée en ce que la roue menante (1), les roues intermédiaires (2) et la roue menée (3) forment un train de roues fermé, la roue menante (1) étant enfermée entre les roues intermédiaires (2) et la roue menée (3) dans la direction radiale.

4. Transmission selon l'une des revendications 1-3, caractérisée en ce que l'angle d'inclinaison α du plan précité (E) est égal à l'angle de pression de la dent.

5. Transmission selon l'une des revendications 1-4, caractérisée en ce qu'elle est réalisée sous forme de transmission à deux ou plusieurs étages.

6. Utilisation de la transmission selon l'une des revendications 1-5 comme engrenage réducteur pour un dispositif d'entraînement de navire.
